(19) **Europäisches Patentamt**
**European Patent Office**
**Office européen des brevets**

(11) **EP 4 503 411 A1**

(12) **EUROPEAN PATENT APPLICATION**

(43) Date of publication:
**05.02.2025 Bulletin 2025/06**

(21) Application number: **23020363.0**

(22) Date of filing: **01.08.2023**

(51) International Patent Classification (IPC):
**H02M 1/00** (2006.01)     **G06N 3/08** (2023.01)
**H02M 3/156** (2006.01)     **H02M 3/157** (2006.01)

(52) Cooperative Patent Classification (CPC):
**H02M 3/157; G06N 3/08; H02M 1/0032;
H02M 1/0048; H02M 3/156**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Infineon Technologies Austria AG
9500 Villach (AT)**

(72) Inventors:
• **Schwabe, Benjamin
81245 München (DE)**
• **Bach, Amandus Dominik
52076 Aachen (DE)**

(74) Representative: **Infineon Patent Department
Intellectual Property
Infineon Technologies AG
Postfach 22 16 44
80506 München (DE)**

(54) **A NEURAL NETWORK ARCHITECTURE FOR CONTROL OF POWER CONVERTERS**

(57)     A controller is presented. The controller may be configured to receive a voltage signal indicative of an output voltage of a switched-mode power supply SMPS, receive a current signal indicative of an output current of the SMPS, and generate a switching signal for controlling a switching element of the SMPS. The controller may comprise a duty cycle controller configured to determine a duty cycle signal based on the voltage signal. The controller may comprise a frequency modifier configured to generate a frequency signal based on at least one of: the voltage signal, the current signal, the duty cycle signal, or another output signal of the duty cycle controller. The controller may comprise a modulator configured to determine the switching signal based on the duty cycle signal and the frequency signal. The frequency modifier may comprise an artificial neural network.

FIG 2

EP 4 503 411 A1

## Description

### Technical field

The present document relates to neural network architectures for controlling power converters. In particular, the present document relates to neural networks for controlling both the duty cycle and the switching frequency of a switched-mode power supply (SMPS).

### Background

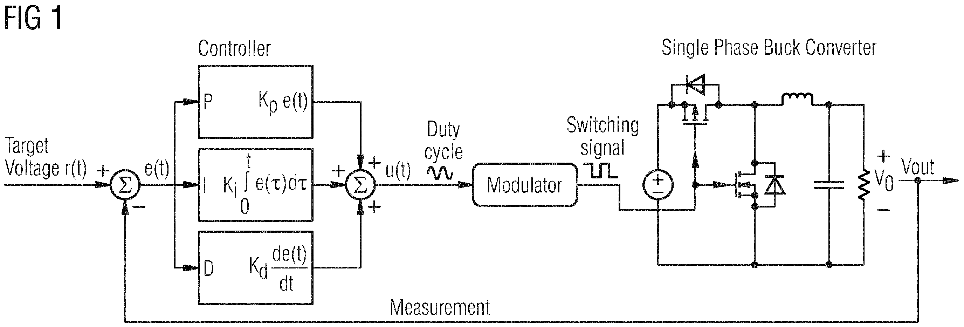

In a large amount of switch mode power converters, a controller (typically based on PID regulation) feeds the control signal into a pulse width modulator (PWM), see Figure 1. However, this approach has severely limited capabilities to react to fast changing load currents. As an example, the current drawn by the load (e.g. a computer CPU) may suddenly increase significantly. As a result, the output capacitor is being partially discharged, leading to a dip in the output voltage. However, the first point in time that can change something is in the next switching cycle. Hence, this dip may become unacceptably large. The under voltage specification limit may be violated which in the case of a memory or CPU power supply can lead to a blue screen exception.

Figure 1 shows a basic control schematic of a PID control based power converter. The error voltage is transferred into a duty cycle signal which then is transformed by a modulator, typically a pulse width modulation, into a switching signal driving the high side and low side metal-oxide-semiconductor field effect transistors (MOSFETs) of the converter. The example depicts a single phase buck converter, but the scheme holds for almost any converter.

A second problem with this approach is that it leads to a low efficiency for low loads: when only little current is drawn, the duty cycle for each switching period is low. This leads to the controller switching the MOSFETs still often but only with a very short on-time for the high side MOSFET. As a result, the switching losses become unnecessarily high. It would be much better to switch to a longer switching period and have larger pulses. This may yield higher current and voltage ripple which may be more acceptable than a bad low-load efficiency.

### Summary

According to an aspect, a controller is presented. The controller may be configured to receive a voltage signal indicative of an output voltage of a switched-mode power supply SMPS, receive a current signal indicative of an output current of the SMPS, and generate a switching signal for controlling a switching element of the SMPS. The controller may comprise a duty cycle controller configured to determine a duty cycle signal based on the voltage signal. The controller may comprise a frequency modifier configured to generate a frequency signal based on at least one of: the voltage signal, the current signal, the duty cycle signal, or another output signal of the duty cycle controller. The controller may comprise a modulator configured to determine the switching signal based on the duty cycle signal and the frequency signal. The frequency modifier may comprise an artificial neural network.

Thus, within this document, the controller comprises the modulator and may be regarded as a "switching signal generation unit". Please note that this is somehow in contrast to the prior art, where the controller typically only determines the duty cycle (see Figure 1) and an external, down-stream modulator generates the switching signals based on the output of the (PID)-controller.

The switching signal may be a binary signal which may be in an ON-state for turning the switching element on, and in an OFF-state for turning the switching element off. The duty cycle signal may then be indicative of the ratio between the time in which the switching signal is in the ON-state (also known as ON-time) and the time in which the switching signal is in the OFF-state (also known as OFF-time). The sum of the ON-time and the OFF-time is denoted as the switching period of the switching signal. As discussed in the following description, the switching period may be changed by the modulator according to the frequency signal received from the frequency modifier. For instance, the duty cycle signal may have, in theory, continuous values between 0 and 1 and, in practice, a plurality of discrete values between 0 and 1. In general, the values of the duty cycle signal could be in a different interval but still be indicative of percentages between 0% and 100%.

The frequency signal may be a signal with continuous or discrete values indicative of a switching period (or a change of the switching period) of the switching signal. Within this document, the inverse of the switching period is denoted as switching frequency of the switching signal.

The frequency modifier may be configured to evaluate the artificial neural network with a frequency which is higher than a switching frequency of the switching signal. In other words, the frequency at which the frequency signal is updated by the frequency modifier may be substantially higher than the switching frequency of the switching signal which is driving the SMPS. Said frequency at which the artificial neural network is evaluated/updated should be as high as possible and may be in practice only be limited by the maximum sampling frequency at which the input signals of the frequency modifier (i.e. the voltage signal, the current signal, the duty cycle signal, or the another output signal of the duty cycle controller) are sampled/determined. In this way, changes of the switching frequency of the switching signal also during a switching period become possible.

The artificial neural network of the frequency modifier may be configured to adjust, if a current value of the current signal decreases, the frequency signal such that a switching period of the switching signal is increased. Thus, a low load condition may be detected with the help of the current signal, and switching losses may be reduced by reducing the switching losses in such a low load condition.

The artificial neural network may be configured to adjust the frequency signal only if the current value of the current signal falls below a current threshold value, wherein said threshold value is a trained parameter of the artificial neural network. The artificial neural network may be configured to adjust the frequency signal using a weighting factor, wherein said weighting factor is a trained parameter of the artificial neural network.

The other way around, the switching frequency may be increased again if the load current increases. To be more specific, the artificial neural network may be configured to adjust, if a current value of the current signal increases, the frequency signal such that a switching period of the switching signal is decreased.

The artificial neural network may be configured to adjust, if a difference between the voltage signal and a target voltage value increases, the frequency signal such that a switching period of the switching signal is decreased. Thus, in case of transients, a fast return to steady state becomes possible due to the increased switching frequency. The difference between the voltage signal and the target voltage value may also be denoted as error signal.

The artificial neural network may be configured to only adjust the frequency signal if the difference between the voltage signal and a target voltage value exceeds a voltage threshold value, wherein said voltage threshold value is a trained parameter of the artificial neural network. The artificial neural network may be configured to adjust the frequency signal using a weighting factor, wherein said weighting factor is a trained parameter of the artificial neural network.

The other way around, the switching frequency may be decreased again when the converter approaches steady state or when steady state is reached. To be more specific, the artificial neural network may be configured to adjust, if the difference between the voltage signal and the target voltage value decreases or stays below a certain threshold, the frequency signal such that a switching period of the switching signal is increased. Hence, switching losses may be minimized in steady state.

The another output signal of the duty cycle controller may be a differential signal indicative of a difference of subsequent values of the voltage signal or an integral signal indicative of a sum of subsequent values of the voltage signal. Generating, by the frequency modifier, the frequency signal based on said differential signal and/or said integral signal has at least two advantages. Firstly, said differential signal and said integral signal may be typically determined by a PID-controller (within the duty cycle controller) anyway and are therefore available for improving the quality of the frequency signal. And secondly, the differential signal can be used for detecting sudden, short-term changes of the output voltage, and the integral signal can be used for detecting long-term changes/offsets of the output voltage.

The modulator may be configured to determine an ON-time of the switching signal based on the duty cycle signal, and to determine a switching period of the switching signal based on the frequency signal. The modulator may be configured to determine an ON-time of the switching signal by comparing a value of the duty cycle signal with a ramp signal, and to determine an OFF-time of the switching signal by comparing the ramp signal with a ramp limit. The modulator may be configured to determine the ramp limit based on the frequency signal.

In other words, the modulator is configured to dynamically adapt the switching period (i.e. the sum of the ON-time and the OFF-time of the switching signal) at any point in time, i.e. also during a switching period which has already started. For example, the modulator may be configured to adapt the switching period based on the frequency signal by increasing/decreasing said ramp limit, even before the ramp signal crosses the duty cycle signal. In this way, a faster reaction of the controller to transients becomes possible.

The ramp signal may be e.g. a ramp voltage. The ramp signal may also be denoted as saw tooth signal. For example, the ramp limit may be a variable upper ramp value. For this example, the ramp signal may repeatedly rise in accordance with a positive ramp slope until the variable upper ramp value is reached. The ramp signal may subsequently fall in accordance with a negative ramp slope until a given lower ramp value is reached. Alternatively, the ramp signal may be instantaneously reset to the given lower ramp value after the variable upper ramp value is reached. Any of the positive ramp slope, the negative ramp slope, the variable upper ramp value and the lower ramp value may be adjustable. However, the modulator may be (only) configured to adjust the variable upper ramp value based on the frequency signal.

In general, the duty cycle controller may be implemented using any conventional PID-controller circuit. At this, the implementation may be analog, digital, or a mixture of both. Alternatively, however, the duty cycle controller may be implemented using an artificial neural network, too. The duty cycle controller may comprise a second artificial neural network which is coupled to the artificial neural network of the frequency modifier.

The second artificial neural network may be configured to determine an error signal based on the voltage signal and a reference value. The second artificial neural network may be configured to calculate the duty cycle signal from the error signal by summing at least a first signal depending on a current value of the error signal and a second signal generated at least in part by an integrating neural network estimating an integral over time of the error signal. The second artificial neural network may be configured to calculate the duty cycle signal by summing the first signal and the second signal with a third signal generated at least in part by a differentiating neural network estimating a differential of the error signal. At least one of the integrating and differentiating neural networks may be a recurrent neural network.

The modulator may be implemented as a traditional modulator circuit. Again, the implementation may be analog, digital, or a mixture of both. For instance, the modulator circuit may comprise a clock circuit, a ramp signal generator, a comparator circuit, and a memory element (such as e.g. an RS flip-flop). Alternatively, however, the modulator may comprise a third artificial neural network which is coupled to the artificial neural network of the frequency modifier and to the second artificial neural network of the duty cycle controller. The third artificial neural network may comprise a neural subnetwork for modelling a ramp signal generator, a neural subnetwork for modelling a comparator, and a neural subnetwork for modelling a memory element.

The controller may comprise a scheduler configured to selectively activate parts of the artificial neural network of the frequency modifier, the second artificial neural network of the duty cycle controller, and the third artificial neural network of the modulator. The scheduler may be configured to selectively activate parts of said networks based on a differential signal indicative of a difference of subsequent values of the error signal. Said differential signal may be generated by the second artificial neural network of the duty cycle controller. Due to the differential nature i.e., the calculation of the difference of subsequent control error values, a fast indicator of a change in state of the system is provided.

According to another aspect, a method of training the artificial neural networks described in the above description is presented. The method may comprise tuning trainable weighting factors and bias values of the artificial neural networks using a reward function. For example, the reward function may include an integral of the difference between the voltage signal and a target voltage value.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or indirectly connected via other circuit elements between them. For example, two elements may be said to be coupled even if there is a circuit element such as a switch (which may be turned on and off) in between them. On the other hand, the term "connect" or "connected" refers to elements being directly electrically connected with each other, e.g. via wires, and no circuit elements are located between them.

**Short description of the figures**

The present invention is illustrated by way of example, and not by way of limitation, in the figures in which like reference numerals refer to similar or identical elements, and in which

Fig. 1 shows an exemplary overview of the control and modulation scheme,
Fig. 2 shows an exemplary overview of the control and modulation scheme,
Fig. 3 shows exemplary signals of a conventional PWM modulator,
Fig. 4 shows exemplary signals of an advanced PWM modulator according to the invention,
Fig. 5 shows an exemplary high-level functionality of the dual edge modulator,
Fig. 6 shows an example of a potential signal flow of the frequency modifier,
Fig. 7 shows an exemplary neural network for reducing the switching frequency for small output currents,
Fig. 8 shows an exemplary neural network for reducing the switching frequency in case of transient events,
Fig. 9 shows an exemplary combination of neural networks including frequency modifications based on output current and error voltage,
Fig. 10 shows an exemplary structure of a modulator,
Fig. 11 shows RS flip-flop based on NOR-gates and its corresponding truth table,
Fig. 12 shows an exemplary residual recurrent neural network implementation of the controller,
Fig. 13 shows another overview of the control and modulation scheme,
Fig. 14 shows a generic structure of a variable frequency PWM modulator network,
Fig. 15 shows on the left a neural net implementation of a NOR-gate, and on the right a neural net implementation of an RS flip-flop using the NOR-NN,
Fig. 16 shows (a) a larger operator, (b) an equivalent neural net implementation, (c) an application of the NN for comparison of the duty cycle signal to the carrier signal,
Fig. 17 shows a combination network including frequency modifications based on output current and error voltage,
Fig. 18 shows a neural network implementation of the variable cycle duration sawtooth generator,
Fig. 19 shows a composition of the different neural networks, and
Fig. 20 shows a structurally reduced and partially event driven neural network with a scheduler.

**Detailed Description**

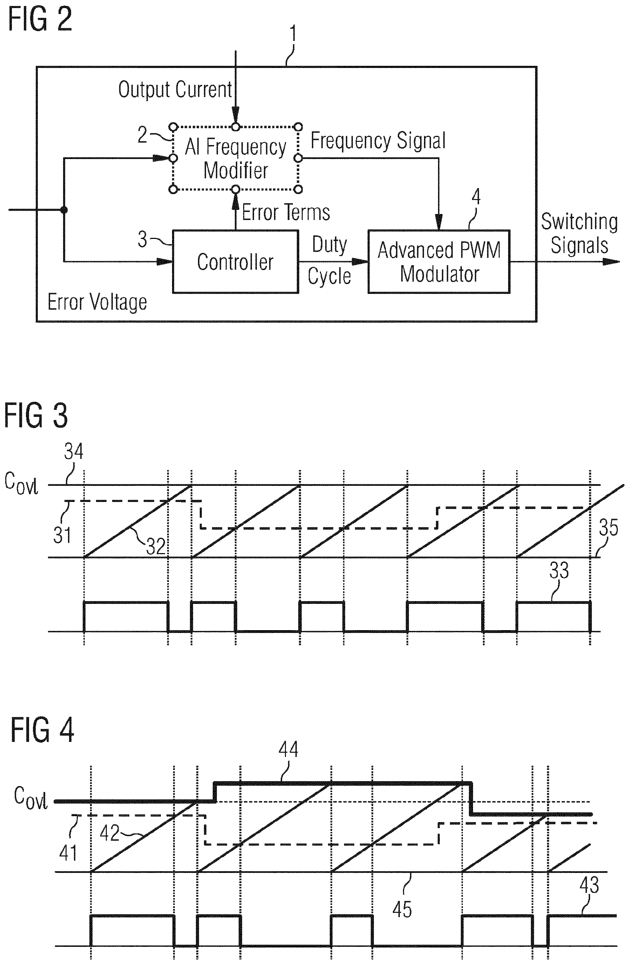

At first, an approach combining classical control schemes with an artificial intelligence (AI) based modification of the frequency is proposed. An exemplary controller 1 is depicted in Figure 2. It comprises a frequency modifier 2, a duty cycle controller 3, and a modulator 4 for generating switching signals for controlling switches of an external power converter (not shown). It should be mentioned that the switching signals may undergo further processing such as e.g. insertion of deadtimes before being applied to said switches. As can be seen in Figure 2, two feedback signals from the power converter are provided as inputs to the controller 1: a measurement/estimation of the output current of the power converter and an error voltage, wherein the error voltage may be determined based on a difference between a measurement/estimation of the output voltage of the power converter and reference voltage.

It should be mentioned that for the example in Fig. 2, only the frequency modifier 2 is using AI (such as e.g. neural networks) and it is assumed that both the duty cycle controller 3 and the modulator 4 are implemented without AI. However, as will be shown in the following description, also the duty cycle controller 3 and the modulator 4 may be implemented using AI, leading to a compact neural network architecture for the overall controller 1.

The modulator 4 ("advanced PWM modulator" or a "dual edge modulator") is fed with the duty cycle information (duty cycle signal) as well as a frequency signal which may prolong or shorten a switching cycle - even during the cycle. The frequency signal is provided by an artificial neural network and its input include error voltage (or target and feedback voltage individually), error terms or controller output, and the output current. In Figure 2, the general signal flow is shown.

One common approach to transfer the controller output of a switch mode power supply into switching signals, is a pulse width modulator, see Figure 3. This kind of a modulator fixes the frequency, meaning the time between two rising edges is fixed. The on-time may vary from 0 to the entire period. Figure 3 shows exemplary signals of a conventional PWM modulator. The input signal 31 (i.e. the duty cycle signal) is compared with a ramp signal 32 (or saw tooth shaped signal, which is e.g. created by a timer counting up a reference value) and the output provides the switching signal 33. The comparator and the saw tooth signal may both be digital or analog signals, depending on their implementation. In this example, the ramp signal 32 rises until the upper ramp value 34 is reached and drops subsequently back to the lower ramp value 35. The upper ramp value 34 is constant, resulting in a constant switching period of the switching signal 33.

We extend the modulator in such a way, that the top of the saw tooth signal can also be modulated, see the variable upper ramp value 44 in Figure 4. This way, we do not only modulate the on time, but also the switching period. Note, it may be vital that the signal controlling the switching period can be updated during the switching cycle. Typically, one may use the same frequency with which the error voltage is being sampled and the differential and integral part of a PID controller may be updated.

Figure 4 shows exemplary signals of an advanced PWM modulator according to the invention. Figure 4 also shows the duty cycle signal 41, the ramp signal 42, the lower ramp value 45, and the generated switching signal 43 which has now a variable switching frequency (or switching period) depending on the variable upper ramp value 44. Since one can vary besides the duty cycle also the switching frequency, this modulation may be also denoted as "dual edge modulation" within this document.

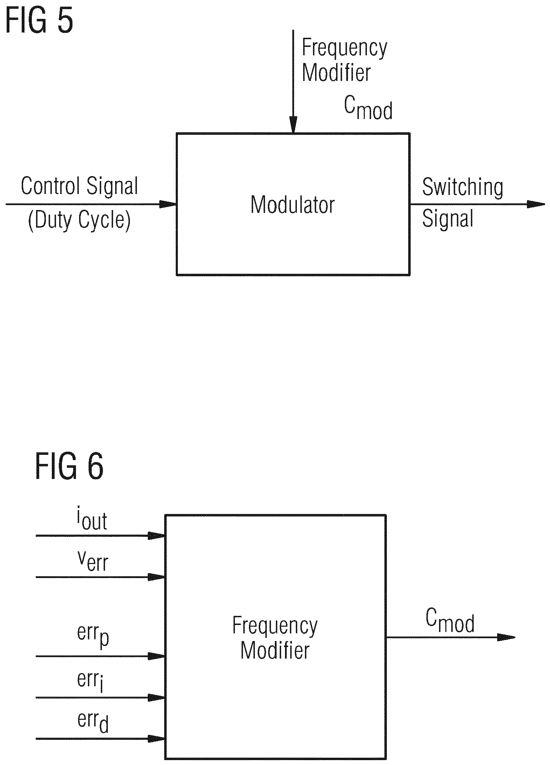

The discussion above is intended to proof that a modulator with varying on time and switching period is feasible, but there are also other ways of implementing such a modulator. Figure 5 shows its high level functionality: based on its inputs, frequency modulator and duty cycle, the switching signal is being produced.

The switching period may be modified in case of transient events and/or light load conditions. A transient event (e.g. induced by the load) requires a sudden reaction of the converter, e.g. a massive and fast load jump leads to a dip in the output voltage and the controller should compensate as quickly as possible. In this case, the switching frequency may be increased. When a light load condition has been detected, the switching frequency may be decreased in order to reduce the amount of switching and therefore increase light load efficiency of the converter. The frequency modifier may have the following inputs: output current and error voltage (feedback voltage for the voltage control loop). Most high-end controllers already provide these signals.

In the case the regulation is realized with the widely used PID regulation and a feedforward path, the error values of the PID regulator may also be included as input signals to the frequency modifier. This way sudden changes (showing in the differential term) or longer offsets (showing in the integral term) can also be used for adjusting the frequency. Note that these terms are usually also updated at a higher frequency than the switching frequency and therefore can change during a switching cycle. The potential information flow is shown in Figure 6.

In the following, we make the following assumption without loss of generality:

$$c_{mod} < 0 \quad increased\ f_{switch}$$

$$c_{mod} = 0 \quad normal$$

$$c_{mod} > 0 \quad decreased\ f_{switch}$$

As shown in Figure 6, the frequency modifier maps any combination of output current of the controller, error voltage (feedback voltage of the converter) and error terms of a potential regulation scheme to the frequency control signal $c_{mod}$. Moreover, the amount the switching frequency can be changed may be limited by a given fraction of the switching frequency.

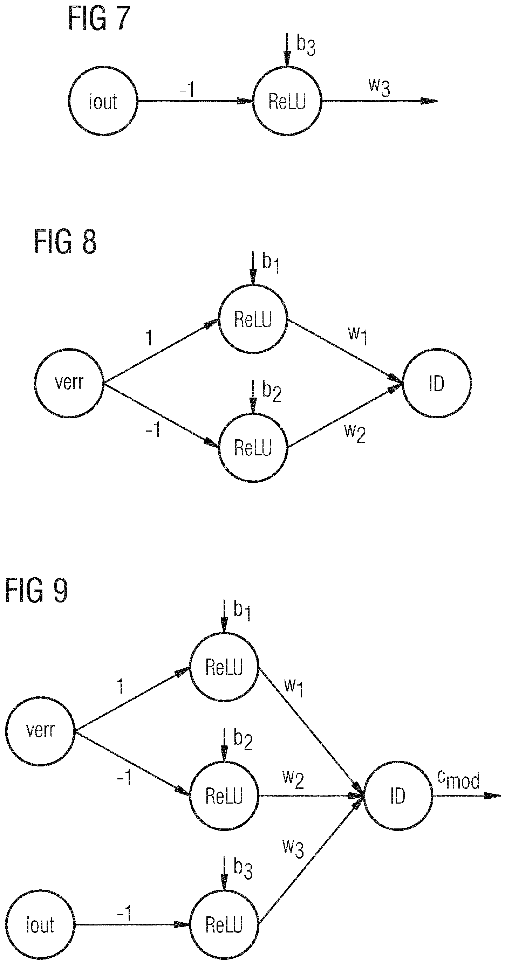

Here, several possible neural network implementations of the frequency modifier block are described, and they can be established by small blocks building the individual functions of the frequency modifier. Fig. 7 shows an exemplary neural network for reducing the switching frequency for small output currents. If the current is below a threshold value (b3) a positive value is produced if the weight factor w3 is negative. This small network produces a positive output, if the output current is below b3 and w3 is negative. Above the value 0 is returned. One major benefit of this approach is that the wake-up routine is much faster and there is a smooth transition from a low frequency mode to the normal operation and even a direct jump to faster frequencies is possible in case the jump out of low load is massive. For this purpose, additional neurons and connections may be added for increasing the switching frequency above the nominal switching frequency.

In the example of Fig. 7, the output current (current signal) is linked with a negative, non- trainable weight -1 to a rectified linear unit (reLU) neuron. The rectified linear unit transfer function of a neuron is defined by the following formula:

$$reLU(x) = \begin{cases} 0, & x < 0 \\ x, & x \geq 0 \end{cases},$$

and is a commonly used activation function in a wide range of neural networks. Their wide usage is due to that a layer of multiple of reLU neurons with variable bias and gain can approximate any continuous function and are computationally inexpensive.

Fig. 8 shows an exemplary neural network for modifying the switching frequency in case of transient events. Transient events may occur at any point in time and disturb the converter, e.g. the voltage may be reduced or increased and it is the job of the controller to bring the system back into the steady state again. Hence, varying the switching period based on the error voltage if the error voltage is exceeding pre-defined (or trained) threshold value. In Figure 8, the output of the neural network is 0 between the threshold values -b2 and b1. Beyond these thresholds a linear decay or incline (depending on w1 and w2) is shown. With other choices of the activation functions in the middle layer or adding additional layers, very complex mappings between verr and this part of the cmod can be created. In Figure 8, a simple mapping of the error voltage (verr) with three parts is shown: a linear path for negative values below -b2, a constant zero value between (-b2 and b1) and another linear part for larger values than b1.

In addition or as a replacement, one can base the modification of the frequency on the controller output directly or on the individual terms of the PID controller. This is especially beneficial if the control scheme also includes the typical feedforward path. The architecture of Figure 6 also applies to this approach. In Figure 9, a simple combination of the approaches described above is proposed.

Potential extensions of these simple networks include: (1) Additional neurons in the middle layer to create more and more complex piecewise linear transfer functions. (2) Additional layers, especially to have the two parts of the frequency determining networks interact with each other. (3) Recurrent neural networks or temporal convolutional networks for handling entire time series information of the mentioned input parameters.

Due to the nature of the problem, reinforcement learning techniques may be suitable. In its target function, the integral of the absolute error voltage and a penalty for each switching event may be integrated.

In summary, a modulation scheme is presented that allows both, the switching period and the on-time, to be modulated for each cycle individually. Further, the modulation scheme may change the switching period based on output current and/or error voltage and this mapping may be realized with a trainable neural network.

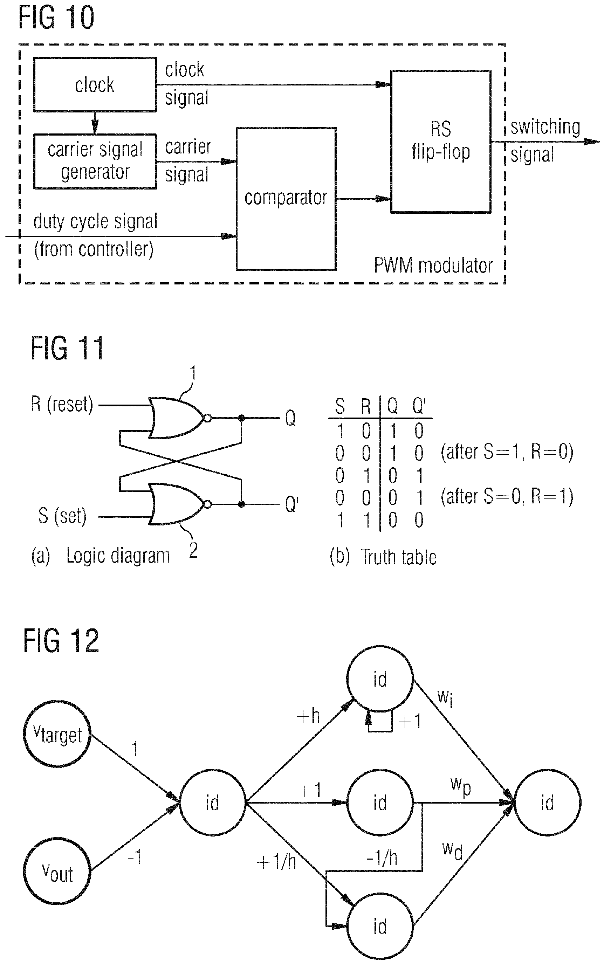

In the following description, a circuit implementation of the modulator is described, wherein said circuit implementation is not based on AI. Figure 10 shows a generic structure of a PWM modulator, wherein an RS flip-flop ensures that only one switching event occurs per period of the carrier signal generator. A PWM modulator comprises a carrier signal generator and a comparator to modulate the duty cycle signal into a switching signal for an according on-time of the switches. In a digital implementation, a clock signal pulsing with the switching period may reset the carrier implemented by a counter and an RS flip-flop that ensures that only one switching event occurs per switching period. Trailing- and leading-edge modulation are used for a sawtooth signal as carrier with different properties regarding the handling of load changes occurring within a switching event. A dual-edge modulation scheme may combine properties of trailing- and leading-edge modulation. A truth table of the RS flip-flop and its implementation using two nor-gates is depicted in Figure 11.

Fig. 12 shows an exemplary residual recurrent neural network implementation of the controller 3. In this AI-based implementation of the controller 3, the proportional, differential and integral components of a PID-controller are represented in Fig. 12 by respective network paths.

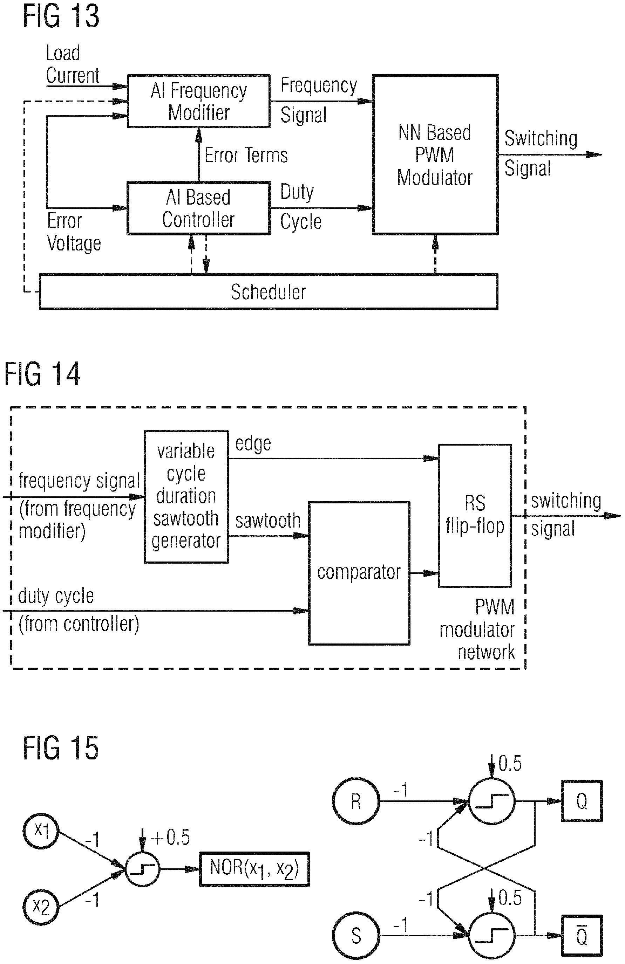

As already indicated in the foregoing description, this document also proposes an approach combining 1) AI based duty cycle controller, 2) AI based frequency modifier and 3) NN based PWM modulator to a single neural network. For this, the PWM modulator is reformulated as a neural network that can process a frequency signal and a duty cycle signal to switching signals. Interpretable neural network representations for a controller and the AI frequency modulator are taken. The implementation of all parts via neural networks offers potential for structural reduction, parallelization, thus, a compact, low-latency design of the controller. The nets are connected as indicated in Figure 13 by the solid arrows. The invention foresees the use of a scheduler that controls the evaluation of the different network parts at different time intervals and partially in an event-driven manner. The scheduling communication is depicted in dashed arrows in Figure 13. Thereby, only a part of the network is always active while part of the modulator stays idle until activated by the scheduler. The scheduler may use the information of the differential part in the PID-mimicking AI based controller to determine whether the system is in steady-state or facing transient events that require to activate parts of the AI frequency modifier or put them to rest.

A representation of the different parts of the dual edge modulator on an equivalent level of abstraction like for the generic PWM modulator in Figure 10 is shown in Figure 14. A consequence of the variable frequency is that the clock with a constant cycle duration needs to be exchanged. Instead, a pulse is generated by the "variable cycle duration sawtooth generator" on each edge of the carrier signal and is propagated to the RS-flip-flop.

To approach a neural-network implementation of the PWM-modulator in Figure 14, an RS flip-flop based on two NOR-gates is chosen. A NOR-gate can be composed as a neural network as shown on the left hand-side of Figure 15. With this definition of a NOR-gate neural network, the RS flip-flop from Figure 11 becomes the network shown on the right-hand side of Figure 15.

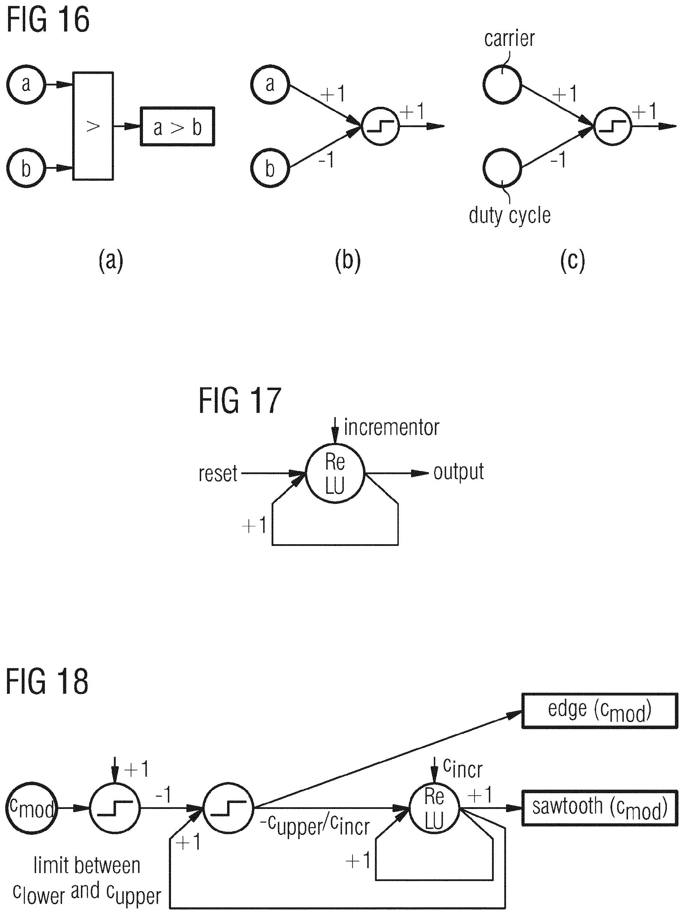

The comparator for the switching signal generation, a larger operator like in Figure 16 (a), is equivalent to the neuron implementation with a Heaviside activation function shown in Figure 16 (b). The comparator output has to be equal to 1 in case the control signal is larger than the carrier signal which leads to the net in Figure 16 (c).

Finally, the third neural network within the PWM modulator network, the variable cycle duration sawtooth generator, must generate a sawtooth signal out of the frequency signal and a pulse at each edge of the sawtooth signal. This is achieved here by an integrator with a constant input which output is reset when the desired carrier maximum ($1+c_{mod}$) is reached. Simultaneous to the reset, a pulse is generated indicating the edge.

The integrator is implemented by a neuron in the third layer that sums up its inputs recursively over time making this a recurrent neural network. This integrator neuron becomes resettable when using the ReLU function as activation function, for which the output is equal to 0 i.e., it is reset, when the sum over its inputs and its bias is negative. By ensuring that that the input indicated by "reset" in Figure 17, is negative and in its absolute value larger than the sum of the current output and the bias term, the reset action is performed.

In a digital controller, the sawtooth is quantized and the quantization incrementor per sample is

$$c_{incr} = T_{sample} \cdot f_{switch,nom}.$$

By initializing the bias to the integrator neuron with this quantization incrementor, the desired gradient of the sawtooth is implemented.

In the first layer, the frequency modifier $c_{mod}$ is added to the nominal value of the sawtooth maximum which equals 1. In addition, the neuron limits its output between $c_{lower}$ and $c_{upper}$, which are upper and lower limits to the sawtooth carrier at the network output. These limits determine the minimum and the maximum switching period that can occur during transients or in low load condition.

To generate the reset signal, a comparison is performed using the comparator network from Figure 16 (b). The inputs to the neuron with Heaviside activation function are the limited frequency modifier signal weighted with -1 and the output of the resettable integrator i.e., another recurrent path is added. Its output becomes 1 when the output of the resettable integrator is equal to the frequency modifier signal. The edge signal is equal to the neuron output. Weighting the edge with a large enough negative value i.e., at least the negative maximum limit of the sawtooth carrier, resetting of the integrator is ensured.

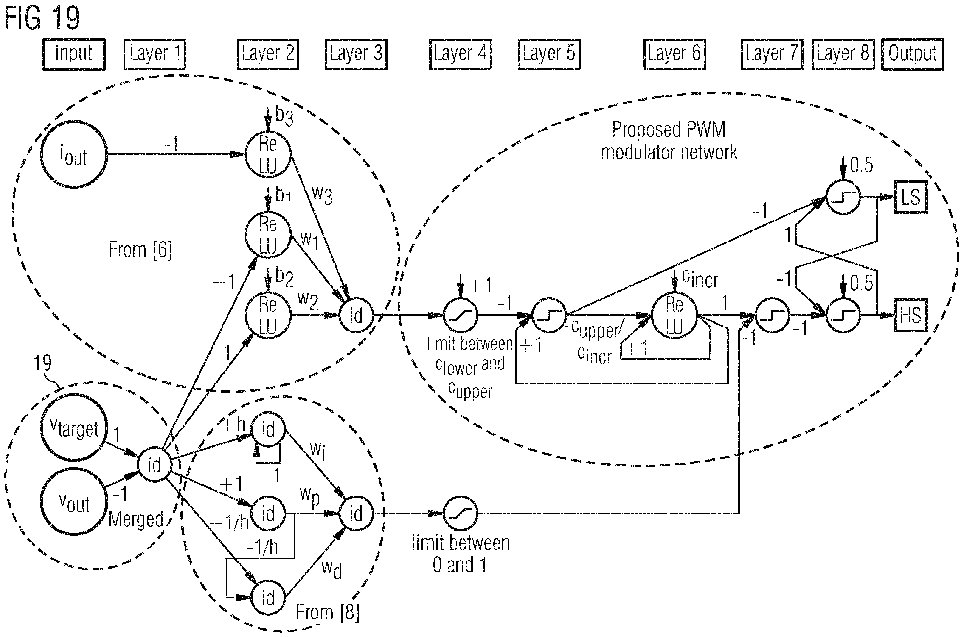

The complete network structure combining the previously described and depicted components is shown in Figure 18. Moreover, the composition of the network structures for the controller and the frequency modifier, as well as the proposed network for the PWM modulator is depicted in Figure 19.

Since the calculation of the voltage error from the target voltage and the output voltage measurement is redundant in both networks, the respective neurons from the input layer and the first hidden layer can be merged as marked in Figure 19 with circle 19.

The composition results in a network with 8 hidden layers. Most layers, however, only show a low number of neurons. Although the outputs are marked as highside (HS) and low-side (LS), the proper introduction of a deadtime between both signals would need to be ensured in a subsequent stage of this network.

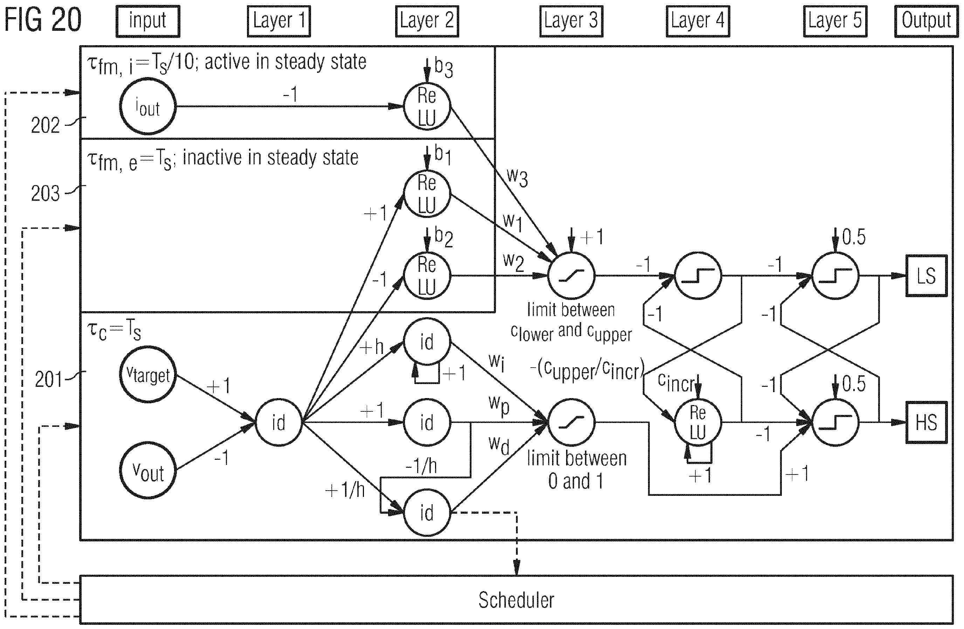

Structural reduction can be reached by defusing neurons at the interfaces of the respective neural network structures into the adjacent networks. For example, neurons from one layer can be easily diffused into another layer by simple replacement. The comparator part of the PWM network, the neuron in layer 7, can be merged with the lower neuron in layer 8. Further the neuron in layer 6 can be put parallel to the neuron in layer 5. With the proposed adaption, the network in Figure 20 with 5 hidden layers is obtained.

With the introduction of a scheduler, the network can operate event driven. The dashed arrows in Figure 20 indicate the signals for the interaction of the scheduler with the network parts: The output of the differential part of the controller network is input to the scheduler. Due to the differential nature i.e., the calculation of the difference of subsequent control error values, a fast indicator of a change in state of the system is provided. Some preparation and further processing of that signal by looking only at its absolute value or filtering may be required to obtain a distinction of steady state and transient system behavior. With this distinction being obtained, it can be used for scheduling of the tasks

- The controller and the PWM modulator (area 201 in Figure 20) may be active all the time and their tasks are constantly scheduled by the scheduler with the time constant $\tau_c$.
- The tasks of the output-current-processing part of the AI based frequency modifier (area 202 in Figure 20) need to be scheduled only during steady state and its update time constant $\tau_{fm,i}$ is reduced compared to $\tau_c$. Since it slows down the switching frequency if it reacts to low output currents, it is counterproductive during transients. Thus, it is put to rest during transient events.
- The part of the frequency modifier processing the control error information and being responsible for increasing the switching frequency (area 203 in Figure 20) can rest during steady state and is only active during transients. Its update time constant $\tau_{fm,e}$ in active state is equal to the one of the controller.

Due to the nature of the problem, reinforcement learning techniques may be a canonical choice. While some weights and biases of the network are fixed, others can be trained to achieve an overall optimized control performance. The processing of the derivative signal given to the scheduler might be adapted as well when e.g., its derivative filter time constant is changed during training. It might even be beneficial to include formulate these processing components as a NN, as well, and include their weights and biases into the training.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1. A controller configured to receive a voltage signal indicative of an output voltage of a switched-mode power supply SMPS, receive a current signal indicative of an output current of the SMPS, and generate a switching signal for controlling a switching element of the SMPS, the controller comprising

    - a duty cycle controller configured to determine a duty cycle signal based on the voltage signal,
    - a frequency modifier configured to generate a frequency signal based on at least one of: the voltage signal, the current signal, the duty cycle signal, or another output signal of the duty cycle controller,
    - a modulator configured to determine the switching signal based on the duty cycle signal and the frequency signal,

    wherein the frequency modifier comprises an artificial neural network.

2. The controller according to claim 1, wherein the artificial neural network is configured to adjust, if a current value of the current signal decreases, the frequency signal such that a switching period of the switching signal is increased.

3. The controller according to claim 2, wherein the artificial neural network is configured to adjust the frequency signal only if the current value of the current signal falls below a current threshold value, wherein said threshold value is a trained parameter of the artificial neural network.

4. The controller according to claim 2 or 3, wherein the artificial neural network is configured to adjust the frequency signal using a weighting factor, wherein said weighting factor is a trained parameter of the artificial neural network.

5. The controller according to any one of the preceding claims, wherein the artificial neural network is configured to adjust, if a difference between the voltage signal and a target voltage value increases, the frequency signal such that a switching period of the switching signal is decreased.

6. The controller according to claim 5, wherein the artificial neural network is configured to only adjust the frequency signal if the difference between the voltage signal and a target voltage value exceeds a voltage threshold value, wherein said voltage threshold value is a trained parameter of the artificial neural network.

7. The controller according to claim 5 or 6, wherein the artificial neural network is configured to adjust the frequency signal using a weighting factor, wherein said weighting factor is a trained parameter of the artificial neural network.

8. The controller according to any one of the preceding claims, wherein the another output signal of the duty cycle controller is a differential signal indicative of a difference of subsequent values of the voltage signal or an integral signal indicative of a sum of subsequent values of the voltage signal.

9. The controller according to any one of the preceding claims, wherein the modulator is configured to determine an ON-time of the switching signal based on the duty cycle signal, and to determine a switching period of the switching signal based on the frequency signal.

10. The controller according to any one of the preceding claims, wherein the modulator is configured to determine an ON-time of the switching signal by comparing a value of the duty cycle signal with a ramp signal, and to determine an OFF-time of the switching signal by comparing the ramp signal with a ramp limit.

11. The controller according to claim 10, wherein the modulator is configured to determine the ramp limit based on the frequency signal.

12. The controller according to any one of the preceding claims, wherein the duty cycle controller comprises a second artificial neural network which is coupled to the artificial neural network of the frequency modifier.

13. The controller according to claim 12, wherein second artificial neural network is configured to determine an error signal based on the voltage signal and a reference value, and wherein second artificial neural network is configured to calculate the duty cycle signal from the error signal by summing at least a first signal depending on a current value of the error signal and a second signal generated at least in part by an integrating neural network estimating an integral over time of the error signal.

14. The controller according to claim 13, wherein the second artificial neural network is configured to calculate the duty cycle signal by summing the first signal and the second signal with a third signal generated at least in part by a differentiating neural network estimating a differential of the error signal.

15. A method of training the artificial neural networks according to any one of the preceding claims, the method comprising: tuning trainable weighting factors and bias values using a reward function.

FIG 1

Controller

Single Phase Buck Converter

$P \quad K_p\, e(t)$

$I \quad K_i \displaystyle\int_0^t e(\tau)\,d\tau$

$D \quad K_d \dfrac{de(t)}{dt}$

Target Voltage r(t)

$e(t)$

$u(t)$

Duty cycle

Modulator

Switching signal

$V_0$

$+$ Vout $-$

Measurement

EP 4 503 411 A1

# FIG 2

# FIG 3

# FIG 4

# FIG 5

Frequency
Modifier
$C_{mod}$

Control Signal
(Duty Cycle) → Modulator → Switching
Signal

# FIG 6

$i_{out}$
$v_{err}$
$err_p$
$err_i$
$err_d$
→ Frequency
Modifier → $C_{mod}$

## FIG 7

## FIG 8

## FIG 9

# FIG 10

# FIG 11

(a)  Logic diagram

| S | R | Q | Q' | |
|---|---|---|---|---|
| 1 | 0 | 1 | 0 | |
| 0 | 0 | 1 | 0 | (after S=1, R=0) |
| 0 | 1 | 0 | 1 | |
| 0 | 0 | 0 | 1 | (after S=0, R=1) |
| 1 | 1 | 0 | 0 | |

(b)  Truth table

# FIG 12

## FIG 13

Load
Current

AI Frequency
Modifier

Frequency
Signal

NN Based
PWM
Modulator

Switching
Signal

Error Terms

AI Based
Controller

Duty
Cycle

Error
Voltage

Scheduler

## FIG 14

frequency signal
(from frequency
modifier)

variable
cycle
duration
sawtooth
generator

edge

sawtooth

comparator

RS
flip-flop

switching
signal

duty cycle
(from controller)

PWM
modulator
network

## FIG 15

$x_1$

$-1$

$+0.5$

$NOR(x_1, x_2)$

$x_2$

$-1$

R

$-1$

$\downarrow 0.5$

Q

$-1$

$-1$

S

$-1$

$\downarrow 0.5$

$\overline{Q}$

## FIG 16

(a)                    (b)                    (c)

## FIG 17

## FIG 18

FIG 19

# FIG 20

| input | Layer 1 | Layer 2 | Layer 3 | Layer 4 | Layer 5 | Output |

$\tau_{fm,\,i} = T_S/10$; active in steady state

$\tau_{fm,\,e} = T_S$; inactive in steady state

$\tau_c = T_S$

202

203

201

18

EP 4 503 411 A1

Scheduler

Europäisches
Patentamt

European
Patent Office

Office européen
des brevets

# EUROPEAN SEARCH REPORT

Application Number

EP 23 02 0363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/253457 A1 (HUAWEI TECH CO LTD [CN]) 23 December 2021 (2021-12-23) | 1,2,5,9, 10,15 | INV. H02M1/00 |
| Y | * figure 2 * * figures 4-5 * * paragraph [0069] – paragraph [0072] * * paragraph [0079] – paragraph [0085] * * paragraph [0092] – paragraph [0096] * ----- | 3,4,6-8, 11-14 | G06N3/08 H02M3/156 H02M3/157 |
| Y | US 2016/226375 A1 (PHADKE VIJAY GANGADHAR [PH] ET AL) 4 August 2016 (2016-08-04) | 11 | |
| A | * paragraph [0034] * ----- | 1-10, 12-15 | |
| Y | US 2023/117488 A1 (SCHWABE BENJAMIN [DE] ET AL) 20 April 2023 (2023-04-20) | 3,4,6-8, 12-14 | |
| A | * figure 2 * * paragraph [0020] – paragraph [0028] * ----- | 1,2,5,9, 10,15 | |

TECHNICAL FIELDS
SEARCHED      (IPC)

H02M
G06N

The present search report has been drawn up for all claims

| Place of search | Date of completion of the search | Examiner |
|---|---|---|
| The Hague | 12 January 2024 | Riehl, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 02 0363

This annex lists the patent family members relating to the patent documents cited in  the above-mentioned European search report.
The members are as contained in the European Patent Office EDP file on
The European Patent Office is in no way liable for these particulars which are merely given for the purpose of information.

12-01-2024

| Patent document cited in search report | | Publication date | Patent family member(s) | | Publication date |
|---|---|---|---|---|---|
| WO 2021253457 | A1 | 23-12-2021 | CN | 114080749 A | 22-02-2022 |
| | | | WO | 2021253457 A1 | 23-12-2021 |
| US 2016226375 | A1 | 04-08-2016 | CN | 106208689 A | 07-12-2016 |
| | | | CN | 204858970 U | 09-12-2015 |
| | | | US | 2016226375 A1 | 04-08-2016 |
| US 2023117488 | A1 | 20-04-2023 | CN | 115993768 A | 21-04-2023 |
| | | | EP | 4167140 A1 | 19-04-2023 |
| | | | US | 2023117488 A1 | 20-04-2023 |

EPO FORM P0459

For more details about this annex : see Official Journal of the European Patent Office, No. 12/82